# EUROPÄISCHE PATENTANMELDUNG

(11) **EP 4 119 852 A1**
(43) Veröffentlichungstag der Anmeldung: **18.01.2023**
(21) Anmeldenummer: 21185558.0
(22) Anmeldetag: 14.07.2021
(51) Int. Cl.: F24D 19/10, G01K 17/06, G05B 13/04, G05D 23/19, G06Q 10/06, G06Q 50/06

(54) **STEUERUNG EINES WÄRMENETZES**

(71) Anmelder: Siemens Aktiengesellschaft, 80333 München (DE)
(72) Erfinder: Huynh, Thanh Phong, 59423 Unna (DE); Thiem, Sebastian, 91413 Neustadt an der Aisch (DE)

(57) **Zusammenfassung**

Es wird ein Verfahren zur Steuerung eines Wärmenetzes mittels einer Steuervorrichtung vorgeschlagen, wobei mehrere Gebäude über eine jeweilige Wärmeübergabestation an das Wärmenetz zum Wärmeaustausch angeschlossen sind, und die Wärmeaustausche durch die Steuervorrichtung gesteuert werden. Das erfindungsgemäße Verfahren ist gekennzeichnet dadurch, dass eine erste und zweite thermische Speicherkapazität (41, 42) wenigstens eines Raumes eines der Gebäude ermittelt werden, wobei die thermischen Speicherkapazitäten (41, 42) derart bei der Steuerung berücksichtigt werden, dass die erste thermische Speicherkapazität(41) bei einer Solltemperatur (30) des Raumes vollständig entladen und bei einer Maximaltemperatur (32) des Raumes vollständig beladen ist, und die zweite thermische Speicherkapazität (42) bei der Solltemperatur (30) vollständig beladen und bei einer Minimaltemperatur (31) des Raumes vollständig entladen ist.

Weiterhin betrifft die Erfindung eine Vorrichtung zur Steuerung eines Wärmnetzes.

## Beschreibung

Die Erfindung betrifft ein Verfahren gemäß dem Oberbegriff des Patentanspruches 1 sowie eine Vorrichtung gemäß dem Oberbegriff des Patentanspruches 11.

Thermische Energie kann mittels thermischer Energiespeicher zwischengespeichert werden. Dadurch können thermische Lasten zeitlich flexibel verschoben werden. Somit sind thermische Energiespeicher beziehungsweise Wärmespeicher von großer Bedeutung für einen effizienten Betrieb eines Wärmenetzes.

Eine Steuerung des Wärmenetzes berücksichtigt hierbei die Wärmespeicher und kann durch diese auf eine Überlast und/oder Unterlast innerhalb des Wärmenetzes flexibel reagieren. Mit anderen Worten können Wärmespeicher zur zeitlichen Verschiebung von thermischer Erzeugung und Verbrauch im Rahmen des Betriebes des Wärmenetzes verwendet werden.

Bekannte Beispiele für thermische Energiespeicher sind sensible, latente oder thermo-chemische Wärmespeicher.

Weiterhin ist es bekannt, insbesondere für Nah- oder Fernwärmenetze, am Wärmenetz angeschlossene Gebäude als thermische Energiespeicher vorzusehen. Hierbei wird die gesamte thermische Speicherkapazität des Gebäudes als Wärmespeicher verwendet.

Der vorliegenden Erfindung liegt die Aufgabe zugrunde, eine Steuerung für ein Wärmenetz bereitzustellen, die eine verbesserte Berücksichtigung der thermischen Speicherfähigkeit eines Gebäudes ermöglicht.

Die Aufgabe wird durch ein Verfahren mit den Merkmalen des unabhängigen Patentanspruches 1 sowie durch eine Vorrichtung mit den Merkmalen des unabhängigen Patentanspruches 15 gelöst. In den abhängigen Patentansprüchen sind vorteilhafte Ausgestaltungen und Weiterbildungen der Erfindung angegeben.

Bei dem erfindungsgemäßen Verfahren zur Steuerung eines Wärmenetzes mittels einer Steuervorrichtung sind mehrere Gebäude über eine jeweilige Wärmeübergabestation an das Wärmenetz zum Wärmeaustausch angeschlossen und die Wärmeaustausche werden durch die Steuervorrichtung gesteuert. Das erfindungsgemäße Verfahren ist gekennzeichnet dadurch, dass eine erste und zweite thermische Speicherkapazität wenigstens eines Raumes eines der Gebäude ermittelt werden, wobei die thermischen Speicherkapazitäten derart bei der Steuerung berücksichtigt werden, dass die erste thermische Speicherkapazität bei einer Solltemperatur des Raumes vollständig entladen und bei einer Maximaltemperatur des Raumes vollständig beladen ist, und die zweite thermische Speicherkapazität bei der Solltemperatur vollständig beladen und bei einer Minimaltemperatur des Raumes vollständig entladen ist.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein.

Das Wärmenetz kann bevorzugt als ein Nahwärmenetz und/oder Fernwärmenetz ausgebildet sein. Die Wärmeübergabestation umfasst typischerweise ein Ventil zur Steuerung sowie einen Wärmeübertrager.

Das Gebäude ist insbesondere ein Wohngebäude und/oder ein Bürogebäude. Der Raum des Gebäudes ist beispielsweise ein Wohnraum und/oder ein Büroraum.

Die erfindungsgemäße Vorrichtung zur Steuerung eines Wärmnetzes umfasst eine Steuervorrichtung zur Steuerung von Wärmeaustauschen zwischen mehreren Gebäuden, die mittels einer jeweiligen Wärmeübergabestation an dem Wärmenetz zum Wärmeaustausch angeschlossen sind. Die erfindungsgemäße Vorrichtung ist dadurch gekennzeichnet, dass die Steuervorrichtung dazu ausgebildet ist, die Wärmeübertragungen zwischen den Gebäuden und dem Wärmenetz nach einem Verfahren gemäß der vorliegenden Erfindung und/oder einer ihrer Ausgestaltungen zu steuern.

Es ergeben sich zum erfindungsgemäßen Verfahren gleichartige und gleichwertige Vorteile und/oder Ausgestaltungen.

Erfindungsgemäß werden die erste und zweite Speicherkapazität als Wärmespeicher bei der Steuerung berücksichtigt. Mit anderen Worten können diese bei der Steuerung zur zeitlichen Verschiebung von thermischer Erzeugung oder Verbrauch innerhalb des Wärmenetzes verwendet werden. Hierbei wird erfindungsgemäß nicht eine thermische Gesamtkapazität des Gebäudes berücksichtigt, sondern zwei thermische Speicherkapazitäten, die jeweils einen Wärmespeicher ausbilden. Mit anderen Worten bildet die erste thermische Speicherkapazität einen ersten Wärmespeicher des Gebäudes und die zweite thermische Speicherkapazität einen zweiten Wärmespeicher des Gebäudes aus.

Gemäß der vorliegenden Erfindung werden für wenigstens den einen Raum des Gebäudes, insbesondere für alle Räume des Gebäudes beziehungsweise für das Gebäude, die erste und zweite Speicherkapazität ermittelt. Hierbei werden die erfindungsgemäßen Speicherkapazitäten bezüglich der Solltemperatur des Raumes ermittelt. Die erste Speicherkapazität ist durch die Solltemperatur und durch die Maximaltemperatur des Raumes gekennzeichnet und in ihrer Größe beschränkt. Die zweite Speicherkapazität ist durch die Minimaltemperatur des Raumes und die Solltemperatur gekennzeichnet und in ihrer Größe beschränkt. Mit anderen Worten erstreckt sich die erste Speicherkapazität von der Solltemperatur zur Maximaltemperatur und die zweite Speicherkapazität von der Minimaltemperatur zur Solltemperatur. Hierbei weist der erste Wärmespeicher mit der ersten Speicherkapazität bei der Solltemperatur einen Ladezustand (englisch: State of Charge; SOC) von 0 Prozent und bei der Maximaltemperatur einen SOC von 100 Prozent auf, während der zweite Wärmespeicher mit der zweiten Speicherkapazität bei der Solltemperatur einen SOC von 100 Prozent und bei der Minimaltemperatur einen SOC von 0 Prozent aufweist. Mit anderen Worten ist der erste Wärmespeicher bei der Solltemperatur vollständig entladen, während der zweite Wärmespeicher bei der Solltemperatur vollständig beladen ist.

Die erste Speicherkapazität korrespondiert somit zu einer Verwendung der thermischen Speicherfähigkeit des Raumes mit einer steigenden Raumtemperatur. Die zweite Speicherkapazität korrespondiert hingegen zur Verwendung der thermischen Speicherfähigkeit des Raumes mit einer sinkenden Raumtemperatur. Dadurch kann erfindungsgemäß ein Temperaturbereich des Raumes oberhalb der Solltemperatur und ein Temperaturbereich des Raumes unterhalb der Solltemperatur bezüglich ihrer Verwendung als Wärmespeicher unterschieden werden. Die Aufteilung in zwei Speicherkapazitäten beziehungsweise zwei Wärmespeicher ermöglicht es somit das Überschreiten der Solltemperatur und das Unterschreiten der Solltemperatur durch die Verwendung des Raumes als Wärmespeicher zu unterscheiden. Dadurch ist eine verschiedene Gewichtung der genannten zwei Szenarien möglich. Beispielsweise kann ein Raum aufgrund seiner Art oder Nutzung besser für eine Verwendung gemäß der zweiten Speicherkapazität ausgebildet sein. Grundsätzlich ist es somit vom Raum, seiner Art und/oder seiner Nutzung abhängig, ob seine Raumtemperatur erhöhbar und/oder reduzierbar ist und, ob eine Erhöhung oder Reduzierung der Raumtemperatur bevorzugt wird. Die vorliegende erfindungsgemäße Unterscheidung der zwei Speicherkapazitäten beziehungsweise Wärmespeicher ermöglicht es dies bei der Steuerung zu berücksichtigen, indem nicht die thermische Gesamtkapazität verwendet wird, sondern diese sozusagen in die erste und zweite Speicherkapazität unterteilt wird. Maßgeblich für die Unterteilung ist hierbei die Solltemperatur des Raumes, die ebenfalls als Mitteltemperatur angesehen werden kann. Das ist deshalb der Fall, da an der Solltemperatur die erste Speicherkapazität vollständig entladen und die zweite Speicherkapazität vollständig beladen ist.

Die vorliegende Erfindung ermöglicht es somit, dass Temperaturabweichungen nach unten oder nach oben bezüglich der Solltemperatur bei der Steuerung als einzelne Wärmespeicher, gegebenenfalls verschieden, berücksichtigt werden. Dadurch können die Art, der Nutzen und/oder Komfortbedürfnisse eines Nutzers des Raumes verbessert bei der Steuerung berücksichtigt werden.

Besonders bevorzugt erfolgt dies dadurch, dass die erste und zweite thermische Speicherkapazität bei der Steuerung verschieden gewichtet werden.

Mit anderen Worten kann eine Speicherung oder eine Bereitstellung von Wärme durch die erste Speicherkapazität oder durch die zweite Speicherkapazität bei der Steuerung bevorzugt werden. Dies kann beispielsweise dadurch erfolgen, dass die zweite Speicherkapazität lediglich bei einer deutlichen Überlast des Wärmenetzes verwendet wird. Weiterhin können verschiedene Gewichtungsfaktoren für die zwei Speicherkapazitäten verwendet werden. Es ist ebenfalls denkbar, verschiedene Preise für die Nutzung der Speicherkapazitäten vorzusehen. Die Gewichtungsfaktoren können weiterhin bevorzugt durch einen Nutzer des Gebäudes und/oder des Raumes festgelegt sein. Die vorliegende Erfindung stellt somit für diese möglichen unterschiedlichen Gewichtungen eine technische Lösung bereit.

Gemäß einer bevorzugten Ausgestaltung der Erfindung wird die erste thermische Speicherkapazität bei einer Unterlast des Wärmenetzes verwendet.

Mit anderen Worten wird im Wärmenetz mehr Wärme bereitgestellt als aktuell verbraucht wird. Es wird somit mehr Wärme erzeugt als verbraucht. Dadurch bildet sich eine Unterlast des Wärmenetzes aus. Der Unterlast kann mittels einer Speicherung der Überschusswärme entgegengewirkt werden, sodass die Steuerung in diesem Fall ein Zwischenspeichern der Überschusswärme vorsehen wird. Hierzu kann bevorzugt die erste Speicherkapazität verwendet werden. Mit anderen Worten wird die über die Wärmeübergabestation auf das Gebäude beziehungsweise den Raum übertragene Wärme solange erhöht, bis die Unterlast behoben und/oder die Maximaltemperatur des Raumes erreicht ist. Bei der Maximaltemperatur ist der erste Wärmespeicher vollständig beladen und kann nicht weiter bei der Steuerung zur Zwischenspeicherung verwendet werden. Ergänzend kann der zweite Wärmespeicher mit der zweiten Speicherkapazität geladen werden, solange dieser noch nicht vollständig geladen ist. Ausgangspunkt ist jedoch typischerweise die Solltemperatur, sodass bevorzugt der erste Wärmespeicher mit der ersten Speicherkapazität in diesem Fall beladen wird, da für die Solltemperatur der zweite Wärmespeicher bereits vollständig geladen ist.

In einer vorteilhaften Weiterbildung der Erfindung wird die zweite thermische Speicherkapazität bei einer Überlast des Wärmenetzes verwendet.

Mit anderen Worten wird im Wärmenetz weniger Wärme bereitgestellt als aktuell verbraucht wird. Es wird somit weniger Wärme erzeugt als verbraucht. Dadurch bildet sich eine Überlast des Wärmenetzes aus. Dieser Überlast kann mittels einer Entladung von Wärmespeichern in das Wärmenetz entgegengewirkt werden, sodass die Steuerung ein Entladen von Wärmespeichern vorsehen wird. Hierzu kann bevorzugt die zweite Speicherkapazität verwendet werden. Hierbei wird der zur zweiten Speicherkapazität zugehörige zweite Wärmespeicher des Gebäudes beziehungsweise des Raumes entladen, indem die über die Wärmeübergabestation auf das Gebäude beziehungsweise den Raum übertragende Wärme reduziert wird. Mit anderen Worten wird solange weniger Wärme über die Wärmeübergabestation auf das Gebäude beziehungsweise den Raum übertragen, bis die Überlast behoben und/oder die Minimaltemperatur des Raumes erreicht ist. Bei der Minimaltemperatur ist der zweite Wärmespeicher vollständig entladen und kann nicht weiter bei der Steuerung zur Entladung verwendet werden. Ergänzend kann der erste Wärmespeicher mit der ersten Speicherkapazität entladen werden, solange dieser noch nicht vollständig entladen ist. Ausgangspunkt ist jedoch typischerweise die Solltemperatur, sodass bevorzugt der zweite Wärmespeicher mit der ersten Speicherkapazität entladen wird, da für die Solltemperatur der erste Wärmespeicher bereits vollständig entladen ist.

Gemäß einer vorteilhaften Ausgestaltung der Erfindung wird für die Solltemperatur ein Wert im Bereich von 21 Grad Celsius bis 23 Grad Celsius festgelegt.

Durch den genannten Temperaturbereich wird vorteilhafterweise ein für Nutzer vorteilhafter und als objektiv angenehm geltender Temperaturbereich bereitgestellt. Die Solltemperatur, ausgehend von welcher die Temperatur des Raumes erhöht oder verringert wird, korrespondiert somit zu typischen angenehmen Temperaturen. Besonders bevorzugt weist die Solltemperatur den Wert 22 Grad Celsius auf. Die Solltemperatur kann grundsätzlich von der Art des Gebäudes, der Art des Raumes, der Nutzung des Gebäudes und/oder der Nutzung des Raumes abhängig sein.

In einer vorteilhaften Weiterbildung der Erfindung wird für die Maximaltemperatur 26 Grad Celsius festgelegt.

Dadurch wird die Raumtemperatur des Raumes für typische Nutzungen vorteilhafterweise nicht zu warm.

Gemäß einer vorteilhaften Ausgestaltung der Erfindung wird für die Minimaltemperatur 18 Grad Celsius festgelegt.

Dadurch wird die Raumtemperatur des Raumes für typische Nutzungen vorteilhafterweise nicht zu kalt.

In einer vorteilhaften Weiterbildung der Erfindung erfolgt das Festlegen der Minimaltemperatur und/oder der Maximaltemperatur in Abhängigkeit der relativen Luftfeuchtigkeit innerhalb des Raumes.

Das ist deshalb von Vorteil, da die thermische Behaglichkeit von Personen innerhalb geschlossener Räume maßgeblich von der Raumtemperatur in Verbindung mit der relativen Luftfeuchtigkeit abhängig ist. Allerdings sollte unabhängig von der Luftfeuchtigkeit eine Minimaltemperatur von 18 Grad Celsius und eine Maximaltemperatur von 26 Grad Celsius nicht unterschritten beziehungsweise überschritten werden.

Gemäß einer vorteilhaften Ausgestaltung der Erfindung werden die erste und zweite thermische Speicherkapazität in Abhängigkeit einer zeitlich variierenden Heizlast des Gebäudes ermittelt.

Für das Halten der Solltemperatur ist eine bestimmte Heizlast erforderlich. Diese Heizlast ist zeitlich variable, beispielsweise aufgrund von schwankenden Umgebungstemperaturen des Gebäudes und/oder schwankender Sonneneinstrahlung. Weiterhin kann zum Laden oder Entladen der durch die erste und zweite Speicherkapazität ausgebildeten Wärmespeicher eine unterschiedliche Wärmemenge/Wärmeleistung aus dem Wärmenetz erforderlich sein, da dies ebenfalls von externen Einflüssen abhängig ist. In diesem Sinne sind die erste und zweite Speicherkapazität dynamisch und in Abhängigkeit der aktuellen Heizlast zu ermitteln. Es ist somit von Vorteil, diese ausgehend von der aktuellen Heizlast zu ermitteln.

In einer vorteilhaften Weiterbildung der Erfindung wird der zeitliche Verlauf der Heizlast mittels einer Prognose und/oder mittels einer thermischen Gebäudesimulation ermittelt.

Vorteilhafterweise liegt dadurch der Steuerung eine Prognose zugrunde, sodass diese zukünftig zu erwartende Wärmeaustausche mit berücksichtigen kann.

Gemäß einer vorteilhaften Ausgestaltung der Erfindung werden die ermittelte erste und zweite Speicherkapazität an die Steuervorrichtung übermittelt.

Typischerweise werden die erste und zweite Speicherkapazität, das heißt ihre aktuelle tatsächliche Speichergröße, in Abhängigkeit der aktuellen Heizlast des Gebäudes beziehungsweise des Raumes durch eine Steuereinheit des Gebäudes ermittelt. Somit ist die Steuervorrichtung, die eine zentrale Steuervorrichtung bezüglich der Gebäude ausgebildet, typischerweise nicht in Kenntnis der Speicherkapazitäten. Es ist somit von Vorteil, wenn die durch das Gebäude beziehungsweise durch ihre Steuereinheit ermittelten thermischen Speicherkapazitäten vorab an die Steuervorrichtung übermittelt werden. Das Ermitteln der zu erwartenden Speicherkapazitäten kann bevorzugt mittels einer Prognose und/oder einer Gebäudesimulation erfolgen, die ebenfalls mittels der Steuereinheit des Gebäudes durchgeführt wird. Die Steuereinheit kann als Energiemanagementsystem für das Gebäude und/oder als Edge-Device ausgebildet sein.

In einer vorteilhaften Weiterbildung der Erfindung werden die zu steuernden Wärmeaustausche mittels eines numerischen Optimierungsverfahrens durch die Steuervorrichtung ermittelt, wobei die erste und zweite thermische Speicherkapazität beim Optimierungsverfahren als Wärmespeicher berücksichtigt werden.

Mit anderen Worten ermittelt die Steuervorrichtung mittels des numerischen Optimierungsverfahrens Sollwerte für die Wärmeaustausche (Wärmeleistungen), die dann an den jeweiligen Wärmeübergabestationen entsprechend ausgeführt werden. Hierbei ist es jedoch erforderlich, dass die Steuervorrichtung in Kenntnis der durch die Gebäude geplanten Wärmeaustausche ist. Zudem muss die Steuervorrichtung in Kenntnis darüber sein, welches Gebäude eine Speicherkapazität zu welchem Zeitpunkt bereitstellt. Mit anderen Worten ist es von Vorteil, wenn ein ermittelter vorgesehener zeitlicher Verlauf (Prognose) für die erste und zweite Speicherkapazität an die Steuervorrichtung übermittelt wird. Die Steuervorrichtung kann dann im Rahmen des Optimierungsverfahrens die geplanten Wärmeaustausche optimal berücksichtigen, das heißt Wärmeerzeugung und Wärmeverbrauch, gegebenenfalls unter Verwendung von Wärmespeichern, insbesondere unter Verwendung der ersten und zweiten Wärmespeicher des Gebäudes, möglichst optimal in Übereinstimmung bringen. Hierzu wird für das Optimierungsverfahren eine Zielfunktion verwendet, deren Wert minimiert oder maximiert wird. Die Zielfunktion hängt von den auszutauschenden Wärmeleistungen ab, sodass durch ihr Minimieren oder Maximieren diese ermittelt werden. Insbesondere bildet die Zielfunktion eine Linearkombination in den auszutauschenden Wärmeleistungen aus. Weiterhin ist die Zielfunktion besonders bevorzugt die ausgetauschte Gesamtwärmemenge, die im Rahmen der Optimierung maximiert wird.

Gemäß einer vorteilhaften Ausgestaltung der Erfindung werden technische Wärmeübertragungsgrenzen der Wärmeübergabestationen beim Optimierungsverfahren als Nebenbedingungen berücksichtigt.

Dadurch respektiert das Ergebnis der Optimierung, das der Steuerung des Wärmenetzes zugrunde liegt, vorteilhafterweise die technischen Randbedingungen der Wärmeübergabestationen, beispielsweise maximale Übertragungsleistungen.

In einer vorteilhaften Weiterbildung der Erfindung wird die Steuervorrichtung für einen Betrieb einer lokalen Wärmemarktplattform verwendet.

Die vorliegende Erfindung ist besonders für einen lokalen Wärmemarkt von Vorteil. Das ist deshalb der Fall, da ein Teilnehmer zwei verschiedene thermische Speicherkapazitäten für wenigstens einen Raum eines Gebäudes für den Betrieb des lokalen Wärmemarktes bereitstellen kann. Die Bereitstellung erfolgt typischerweise mittels Angebote. Mit anderen Worten können zwei verschiedene Angebote zur Verwendung der thermischen Speicherfähigkeit des Raumes an die lokale Wärmemarktplattform übermittelt werden. Hierbei übermittelt das Gebäude beziehungsweise eine Steuereinheit des Gebäudes basierend auf einer Prognose und/oder einer Gebäudesimulation eine erste und/oder zweite Speicherkapazität, die das Gebäude beziehungsweise der Raum unter Einhaltung der Maximaltemperatur und der Minimaltemperatur zu bestimmten zukünftigen Zeitbereichen bereitstellen kann. Hierbei ermöglicht es die vorliegende Erfindung vorteilhafterweise, dass die erste und zweite Speicherkapazität, beispielsweise über Vergütungen für ihre Verwendung, verschieden gewichtet werden. Dadurch wird eine verbesserte Flexibilität für den lokalen Wärmemarkt bereitgestellt.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:
- Figur 1: einen Komfortbereich in Abhängigkeit der Temperatur und der relativen Luftfeuchtigkeit innerhalb eines Raumes; und
- Figur 2: eine exemplarische Darstellung der erfindungsgemäß vorgesehenen ersten und zweiten Speicherkapazitäten.

Gleichartige, gleichwertige oder gleichwirkende Elemente können in einer der Figuren oder in den Figuren mit denselben Bezugszeichen versehen sein.

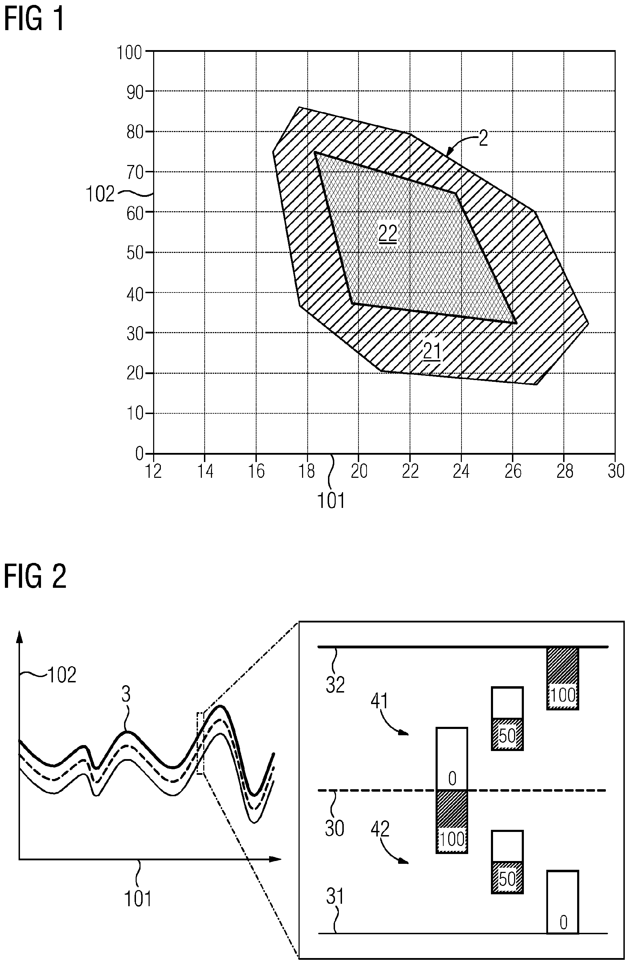

Die Figur 1 zeigt ein Diagramm, welches einen typischen Komfortbereich 2 eines Raumes eines Gebäudes verdeutlicht.

An der Abszisse 101 des Diagramms ist die Raumtemperatur in Grad Celsius aufgetragen. An der Ordinate 102 des Diagramms ist die relative Luftfeuchtigkeit des Raumes aufgetragen.

Weiterhin kann ein Gebäude in Sinne der vorliegenden Erfindung als Raum aufgefasst werden, indem dem Gebäude eine mittlere Raumtemperatur und eine mittlere relative Luftfeuchtigkeit zugeordnet wird.

Der Komfortbereich 2 ist von der Raumtemperatur sowie von der relativen Luftfeuchtigkeit abhängig. Mit anderen Worten begrenzen die Raumtemperatur und die relative Luftfeuchtigkeit ein Gebiet innerhalb des Diagramms (Komfortbereich 2), innerhalb welchen Gebietes sich Nutzer des Raumes typischerweise behaglich beziehungsweise wohlfühlen. Hierbei können ein erster Komfortbereich 21 (noch behaglicher Bereich) und ein zweiter Komfortbereich 22 (behaglicher Bereich) unterschieden werden. Beide Komfortbereiche 21, 22 sind durch den Komfortbereich 2 umfasst.

Das dargestellte Diagramm verdeutlicht, dass bei einer Raumtemperatur von 22 Grad Celsius eine relative Luftfeuchtigkeit von etwa 40 Prozent bis etwa 65 Prozent als behaglich gilt. Der behagliche Bereich der relativen Luftfeuchtigkeit nimmt mit steigender Raumtemperatur ab. So gilt bei einer Raumtemperatur von 26 Grad Celsius lediglich eine relative Luftfeuchtigkeit von etwa 32 Prozent als behaglich. Eine Raumtemperatur von etwa 18 Grad Celsius gilt lediglich bei einer relativen Luftfeuchtigkeit von etwa 75 Prozent als behaglich. Mit anderen Worten bilden die Raumtemperaturen von 18 Grad Celsius und 26 Grad Celsius eine objektive Grenze der Behaglichkeit aus, demnach unterhalb von 18 Grad Celsius und oberhalb von 26 Grad Celsius für keine relative Luftfeuchtigkeit das Raumklima mehr als behaglich gilt. Der noch behagliche Bereich erstreckt sich jedoch weiter bis etwa minimal 17 Grad Celsius und maximal etwa 29 Grad Celsius.

Es ist eine Erkenntnis der vorliegenden Erfindung, dass der Komfortbereich 2 und seine verschiedenen Raumtemperaturen genutzt werden kann, um eine thermische Flexibilität für ein Wärmenetz, insbesondere innerhalb eines lokalen Wärmemarktes, bereitzustellen. Mit anderen Worten kann die inhärente Speicherfähigkeit von Gebäuden als thermischer Energiespeicher (Wärmespeicher) verwendet werden. Hierbei sieht die vorliegende Erfindung weiterführend eine Aufteilung der inhärenten Speicherfähigkeit von Gebäuden in zwei Wärmespeichern vor, die abhängig vom Komfortbereich 2, festgelegt sind. Dies wird in Figur 2 verdeutlicht.

Die Figur 2 verdeutlicht das Festlegen der zwei Wärmespeicher beziehungsweise der zwei Speicherkapazitäten 41, 42 von einem Raum eines Gebäudes, insbesondere für alle Räume des Gebäudes und/oder für das Gebäude durch Verwendung einer mittleren Temperatur und mittleren relativen Luftfeuchtigkeit.

Die Figur 2 zeigt in einem Diagramm einen zeitlichen Verlauf einer Heizlast 3 für den Raum beziehungsweise für das Gebäude. An der Abszisse 101 des Diagramms ist die Zeit in beliebigen Einheiten aufgetragen. An der Ordinate 102 des Diagramms ist die erforderliche Heizlast zum Halten einer Raumtemperatur aufgetragen.

Die Heizlast 3 ist zeitabhängig, das heißt, dass die Heizlast, die zum Halten einer Solltemperatur 30 des Raumes erforderlich ist, mit der Zeit variiert. Beispielsweise ist die Heizlast im Winter größer als im Sommer. Weiterhin bilden sich aufgrund einer unterschiedlichen Bewölkung und/oder Sonneneinstrahlung tägliche Schwankungen aus.

Das Diagramm zeigt drei Kurven. Die mittlere Kurve korrespondiert zur Heizlast 3, die zum Halten der Solltemperatur, beispielsweise 22 Grad Celsius erforderlich ist. In diesem Sinne bildet die Heizlast 3 eine Grundheizlast aus. Die oberste Kurve ist mit der Heizlast assoziiert, die für eine Erhöhung der Raumtemperatur auf eine Maximaltemperatur des Raumes, beispielsweise 26 Grad Celsius, erforderlich ist. Die unterste Kurve entspricht der Heizlast, die für eine Reduzierung der Raumtemperatur auf eine Minimaltemperatur, beispielsweise 18 Grad Celsius, erforderlich ist. Vorliegend bilden die Maximaltemperatur und die Minimaltemperatur die Grenzen des behaglichen Komfortbereiches aus.

Gemäß dem Komfortbereich des Raumes kann seine Raumtemperatur minimal auf 18 Grad Celsius reduziert und maximal auf 26 Grad Celsius erhöht werden. Somit können ausgehend von der Solltemperatur von 22 Grad Celsius zwei Temperaturbereiche unterschieden werden.

Der erste Temperaturbereich von der Solltemperatur 30 bis zur Maximaltemperatur 32 bildet eine erste Speicherkapazität 41, das heißt einen ersten Wärmespeicher aus. Der zweite Temperaturbereich von der Minimaltemperatur 31 bis zur Solltemperatur 30 bildet eine zweite Speicherkapazität 42, das heißt einen zweiten Wärmespeicher aus. Hierbei ist der erste Wärmespeicher bei der Solltemperatur 30 vollständig entladen und bei der Maximaltemperatur 32 vollständig beladen. Der zweite Wärmespeicher ist bei der Solltemperatur 30 vollständig beladen und bei der Minimaltemperatur 31 vollständig entladen. Dadurch werden sinnbildlich bezüglich der Solltemperatur 30 diametrale Wärmespeicher ausgebildet. Dadurch kann eine Erhöhung der Raumtemperatur und eine Verringerung der Raumtemperatur verschieden gewichtet werden und verschieden bei der Steuerung berücksichtigt werden. Eine solche verschiedene Gewichtung ist insbesondere im Hinblick auf die unterschiedlichen Auslastungen des Wärmenetzes von Vorteil. Dies ist weiterhin insbesondere im Hinblick einer Anbindung an einen lokalen Wärmemarkt vorteilhaft, da durch die erfindungsgemäß vorgesehenen zwei Speicherkapazitäten 41, 42 mehr Flexibilität bezüglich der Wärmeerzeugung und des Wärmeverbrauchs als bei einer einfachen Verwendung einer Gesamtkapazität bereitgestellt wird.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 2: Komfortbereich
- 3: Heizlast
- 21: noch behaglicher Bereich
- 22: behaglicher Bereich
- 30: Solltemperatur
- 31: Minimaltemperatur
- 32: Maximaltemperatur
- 41: erste Speicherkapazität
- 42: zweite Speicherkapazität
- 101: Abszisse
- 102: Ordinate

## Patentansprüche

1. Verfahren zur Steuerung eines Wärmenetzes mittels einer Steuervorrichtung, wobei mehrere Gebäude über eine jeweilige Wärmeübergabestation an das Wärmenetz zum Wärmeaustausch angeschlossen sind, und die Wärmeaustausche durch die Steuervorrichtung gesteuert werden, **gekennzeichnet dadurch, dass** eine erste und zweite thermische Speicherkapazität (41, 42) wenigstens eines Raumes eines der Gebäude ermittelt werden, wobei die thermischen Speicherkapazitäten (41, 42) derart bei der Steuerung berücksichtigt werden, dass die erste thermische Speicherkapazität(41) bei einer Solltemperatur (30) des Raumes vollständig entladen und bei einer Maximaltemperatur (32) des Raumes vollständig beladen ist, und die zweite thermische Speicherkapazität (42) bei der Solltemperatur (30) vollständig beladen und bei einer Minimaltemperatur (31) des Raumes vollständig entladen ist.

2. Verfahren gemäß Anspruch 1, **gekennzeichnet dadurch, dass** die erste und zweite thermische Speicherkapazität (41, 42) bei der Steuerung verschieden gewichtet werden.

3. Verfahren gemäß Anspruch 1 oder 2, **gekennzeichnet dadurch, dass** die erste thermische Speicherkapazität (41) bei einer Unterlast des Wärmenetzes verwendet wird.

4. Verfahren gemäß einem der vorhergehenden Ansprüche, **gekennzeichnet dadurch, dass** die zweite thermische Speicherkapazität (42) bei einer Überlast des Wärmenetzes verwendet wird.

5. Verfahren gemäß einem der vorhergehenden Ansprüche, **gekennzeichnet dadurch, dass** für die Solltemperatur (30) ein Wert im Bereich von 21 Grad Celsius bis 23 Grad Celsius festgelegt wird.

6. Verfahren gemäß einem der vorhergehenden Ansprüche, **gekennzeichnet dadurch, dass** für die Maximaltemperatur (32) 26 Grad Celsius festgelegt wird.

7. Verfahren gemäß einem der vorhergehenden Ansprüche, **gekennzeichnet dadurch, dass** für die Minimaltemperatur (31) 18 Grad Celsius festgelegt wird.

8. Verfahren gemäß einem der vorhergehenden Ansprüche, **gekennzeichnet dadurch, dass** das Festlegen der Minimaltemperatur (31) und/oder der Maximaltemperatur (32) in Abhängigkeit der relativen Luftfeuchtigkeit innerhalb des Raumes erfolgt.

9. Verfahren gemäß einem der vorhergehenden Ansprüche, **gekennzeichnet dadurch, dass** die erste und zweite thermische Speicherkapazität (41, 42) in Abhängigkeit einer zeitlich variierenden Heizlast (3) des Gebäudes ermittelt werden.

10. Verfahren gemäß einem der vorhergehenden Ansprüche, **gekennzeichnet dadurch, dass** der zeitliche Verlauf der Heizlast (3) mittels einer Prognose und/oder mittels einer thermischen Gebäudesimulation ermittelt wird.

11. Verfahren gemäß einem der vorhergehenden Ansprüche, **gekennzeichnet dadurch, dass** die ermittelte erste und zweite Speicherkapazität (41, 42) an die Steuervorrichtung übermittelt werden.

12. Verfahren gemäß Anspruch 11, **gekennzeichnet dadurch, dass** die zu steuernden Wärmeaustausche mittels eines numerischen Optimierungsverfahrens durch die Steuervorrichtung ermittelt werden, wobei die erste und zweite thermische Speicherkapazität (41, 42) beim Optimierungsverfahren als Wärmespeicher berücksichtigt werden.

13. Verfahren gemäß Anspruch 12, **gekennzeichnet dadurch, dass** technische Wärmeübertragungsgrenzen der Wärmeübergabestationen beim Optimierungsverfahren als Nebenbedingungen berücksichtigt werden.

14. Verfahren gemäß einem der vorhergehenden Ansprüche, **gekennzeichnet dadurch, dass** die Steuervorrichtung für einen Betrieb einer lokalen Wärmemarktplattform verwendet wird.

15. Vorrichtung zur Steuerung eines Wärmnetzes, umfassend eine Steuervorrichtung zur Steuerung von Wärmeaustauschen zwischen mehreren Gebäuden, die mittels einer jeweiligen Wärmeübergabestation an dem Wärmenetz zum Wärmeaustausch angeschlossen sind, **dadurch gekennzeichnet, dass** die Steuervorrichtung dazu ausgebildet ist, die Wärmeübertragungen zwischen den Gebäuden und dem Wärmenetz nach einem Verfahren gemäß einem der vorhergehenden Ansprüche zu steuern.
